# EUROPÄISCHE PATENTSCHRIFT

(11) **EP 1 854 022 B1**
(45) Veröffentlichungstag und Bekanntmachung des Hinweises auf die Patenterteilung: **10.12.2008**
(21) Anmeldenummer: 06707145.6
(22) Anmeldetag: 22.02.2006
(51) Int. Cl.: G06F 15/78, G06F 13/38

(54) **STEUERGERÄT MIT KONFIGURIERBAREN HARDWAREMODULEN**
CONTROL APPLIANCE COMPRISING CONFIGURABLE HARDWARE MODULES
APPAREIL DE COMMANDE A MODULES MATERIELS CONFIGURABLES

(30) Priorität: 04.03.2005 DE 102005010476
(43) Veröffentlichungstag der Anmeldung: 14.11.2007
(73) Patentinhaber: Daimler AG, 70327 Stuttgart (DE)
(72) Erfinder: BECKER, Jürgen, 76744 Wörth (DE); EISENMANN, Joachim, 73079 Süssen (DE); HÜBNER, Michael, 76199 Karlsruhe (DE); LUKA, Jürgen, 71732 Tamm (DE)
(86) Internationale Anmeldenummer: PCT/EP2006/001578
(87) Internationale Veröffentlichungsnummer: WO 2006/094628

(56) Entgegenhaltungen:
- EP-A- 1 372 084
- DE-A1- 10 139 610
- DE-A1- 10 160 476
- US-A- 5 999 990
- US-A1- 2005 027 836
- SIMMLER H ET AL: "Multitasking on FPGA Coprocessors" LECTURE NOTES IN COMPUTER SCIENCE, SPRINGER VERLAG, NEW YORK, NY, US, August 2000 (2000-08), Seiten 121-130, XP002319858 ISSN: 0302-9743

## Beschreibung

Die Erfindung betrifft eine Vorrichtung zur Steuerung von Komponenten in einem Verkehrsmittel mit einer Schnittstelle zu einem externen Datenbus, einem Hardwaremodul und einem Speicher zur Bereitstellung der für die Datenverarbeitung notwendigen Daten, wobei Steuerungsaufgaben von zeitlich parallel zueinander ansteuerbaren Steuerprozessen abgearbeitet werden und dadurch direkt über eine Schnittstelle zum Datenbus oder mit Sensoren/Aktoren kommunizieren, um Verkehrsmittelkomponenten zu steuern. Außerdem ist ein Verfahren zum Ablauf auf dieser Vorrichtung beschrieben.

Heute sind im Verkehrsmittel Steuergeräte eingesetzt, die unterschiedliche Komponenten, wie beispielsweise Fensterheber, Schiebedach und andere elektromotorische Komponenten ansteuern. Die Steuergeräte sind untereinander zur Kommunikation mittels elektrischen Datenbusses vernetzt. Die elektronische Vernetzung im Verkehrsmittel wird immer komplexer mit bis zu 70 vernetzten Steuergeräten.

Bei den durch die Steuergeräte abgearbeiteten Prozessen handelt es sich um zeitlich begrenzte Steueraufgaben, so dass ein Steuergerät für Fensterheber und Schiebedach bezogen auf die Gesamtlaufzeit des Fahrzeugs nur in relativ geringem zeitlichem Umfang Steueraufgaben durchführt. In den Zeiträumen, wo keine Ansteuerung der zugeordneten Komponenten erfolgt, bleibt die Datenverarbeitungs-Ressource des Steuergeräts ungenutzt. Andererseits führt die Verdichtung der Steueraufgaben auf einem einzigen Innenraum-Steuergerät zu Laufzeitproblemen, wobei wichtige Steuerungsaufgaben gegebenenfalls abwarten müssen, bis vorhergehende Steuerungsaufgaben durch den seriellen Datenverarbeitungsprozessor abgearbeitet sind. Dies hat in der Vergangenheit dazu geführt, dass häufig für weitere Funktionalitäten im Verkehrsmittel ein zusätzliches Steuergerät verbaut wird. Dies hat das Ergebnis zur Folge, dass im Innenraum selten mehrere Funktionen gleichzeitig benötigt werden, so dass viele Steuergeräte überwiegend passiv auf die Anforderung der Insassen warten.

Ein erster Ansatz führt zu einer Trennung der Kommunikations- und Steuerungsaufgaben innerhalb eines Steuergeräts, so dass für die Ansteuerung der Komponenten ein eigener Prozessor neben dem Kommunikationsprozessor vorgesehen ist, und dadurch eine höhere Dichte von Steuerungsprozessen für unterschiedliche Komponenten auf demselben Steuergerät vorgesehen sein können. Ein derartiges Steuergerät mit zwei Prozessoren ist in Zusammenhang mit Rechenzeit-aufwendigen Ansteuerung des Motors bzw. des Getriebes aus der DE 101 604 76 bekannt.

Ferner sind Steuergeräte bekannt, die einen konventionellen Mikrorechner aufweisen und dessen Schnittstellen mittels eines Field Programmable Gate Array (FPGA) umgesetzt sind. Eine derartige Hardware ist aus der DE 101 396 10 bekannt. Mittels eines FPGA kann die Schnittstellen-Hardware umkonfiguriert werden. Im Gegensatz zu der üblichen Aufspielung veränderter Software, wird hierbei die Eigenschaft genutzt, die einzelnen Speicherzellen des FPGA miteinander unterschiedlich zu verdrahten. Beim FPGA ist jede Speicherzelle an eine Vernetzungsmatrix angeschlossen, die durch Umkonfiguration verändert werden kann. Beispielsweise lassen sich mittels eines FPGAs Logikbausteine nachbilden, wobei diese in einer Hardwarebeschreibungssprache beschrieben werden und durch Herunterladen der aus der Hardwarebeschreibung erzeugten Hardwarekonfiguration auf die Vernetzungssteuerung kann die Verdrahtung zwischen den Speicherzellen so eingestellt werden, dass die gewünschten Logikgatter entstehen. Übliche konventionelle Hardware kann während der Laufzeit nicht verändert werden. Im Gegensatz dazu kann beim FPGA durch Herunterladen einer weiteren aus der Hardwarebeschreibung erzeugten Hardwarekonfiguration auf das FPGA, dessen Vernetzung so eingestellt werden, dass ein anderer Logikbaustein entsteht. Dabei werden die Speicherzellen des FPGA's wie Flip-Flops geschaltet und es lassen sich sämtliche Logikeinheiten und Datenverarbeitungs-Hardwarestrukturen aus diesen Flip-Flops aufbauen. Durch Umkonfigurieren des FPGA's kann aus den vorhandenen Logikgattern beispielsweise eine Datenverarbeitungseinheit entstehen, die wie ein Mikrorechner aufgebaut ist. Auf diese FPGA-Datenverarbeitungseinheit kann dann wieder die konventionelle Software zum Abarbeiten aufgespielt werden. Derartige umkonfigurierbare Speichereinheiten mit Datenverarbeitungsfunktionalität, wie Logikgatter, und nachgebildete Recheneinheiten, werden in der folgenden Beschreibung als Hardwaremodul bezeichnet. Zu den Hardwaremodulen werden auch die nicht umkonfigurierbaren Datenverarbeitungseinheiten und Hardwareschaltungen gerechnet.

Die US 2005/027836 A1 offenbart ein Computersystem, wobei Programmmodule in ein FPGA ausgelagert werden. Dieses Computersystem betrifft jedoch nicht die Anwendung in einem Verkehrsmittel. Ferner beschreibt Simmler, H.: "Multitasking on FPGA Coprocessors", XP002319858 parallel ablaufende Prozesse in einem FPGA, wiederum bei der Anwendung in einem Standard-Computersystem, also ohne die gattungsgemäß beanspruchten Verkehrsmittel-Komponenten der hier vorliegenden Erfindung.

Es ist eine zukünftige Herausforderung für die Systemarchitektur im Verkehrsmittel, die Anzahl der Steuergeräte einzusparen und gleichzeitig die Auslastung der Datenverarbeitungseinheiten zu erhöhen.

Es ist Aufgabe der vorliegenden Erfindung ein Steuergerät bereitzustellen, mit dem Steuerungsprozesse im Verkehrsmittel bei hoher Datenverarbeitungsdichte auf Hardwaremodulen ausgeführt werden können. Ferner wird ein Verfahren zur Ausführung auf dem Steuergerät vorgestellt.

Diese Aufgabe wird durch die Merkmale des unabhängigen Anspruchs 1 gelöst. Danach weist das Steuergerät mindestens zwei konfigurierbare Hardwaremodule auf, die aufgrund der Nachrichten vom Datenbus oder der Steuerbefehle des Steuergeräts mehrere Steuerprozesse auf den Hardwaremodulen zeitlich parallel durchführen, wobei eine Verteilungseinheit zum Zuordnen der parallel ablaufenden Steuerungsprozesse auf die Hardwaremodule vorgesehen ist, so dass nach dem Zuordnen eines Steuerungsprozesses zu einem Hardwaremodul zunächst eine Hardwarekonfiguration in das Hardwaremodul geladen wird, um dessen Hardware neu zu konfigurieren und dass dann nach Zuweisen der Eingangsdaten für den Steuerungsprozess das neu konfigurierte Hardwaremodul die Steuerung der zugeordneten Komponente übernimmt.

Das Steuergerät weist erfindungsgemäß mehrere Hardwaremodule auf, die parallel zueinander mit der Abarbeitung von Prozessen durch die Verteilungseinheit beauftragt werden können. Die Verteilungseinheit stellt dabei für den im Wartespeicher höchsten Steuerungsprozess alle Anforderungen bereit, so dass die Abarbeitung sofort nach Abschluss des vorhergehenden Prozess gestartet werden kann. Dazu ist es gegebenenfalls notwendig, die Hardwarekonfiguration bereitzustellen, um das betroffene Hardwaremodul für den abzuarbeitenden Prozess umzukonfigurieren. Beispielsweise kann dabei nur ein Teil des Hardwaremoduls betroffen sein, so dass auf der verbleibenden Chipfläche des Hardwaremoduls ein anderer Prozess weiterläuft. Das erfindungsgemäße Steuergerät weist neben der Verteilungseinheit ein Mittel zur Zuordnung der Priorisierungskennung an den jeweiligen Steuerungsprozess auf. Es kann ein interner Bus vorgesehen sein, der den Steuerungsprozess in elektronischer Form, d. h. dessen Daten bzw. Informationen und die Hardwarekonfiguration dem betreffenden Hardwaremodul zur Verfügung stellt. An dem internen Datenbus sind dann mehrere, beispielsweise zwei bis sechs Hardwaremodule angeordnet. Die Verteilungseinheit hat eine Schnittstelle zu einem externen Datenbus an den das betreffende Steuergerät angeschlossen ist. Dadurch können Anforderungen für Prozesse, welche über den externen Datenbus an das Steuergerät gemeldet werden, sofort priorisiert und entsprechend verarbeitet werden. Auf dem Steuergerät können noch Komprimierungs/Dekomrimierungseinheiten und Flash-Speicher vorhanden sein. In dem Flash-Speicher können sowohl die Hardwarekonfiguration zur Umkonfigurierung der Module als auch Softwaremodule bereitgestellt werden, die auf einem als Datenverarbeitungseinheit konfigurierten Hardwaremodul ausgeführt werden können.

Zusätzlich kann auf dem Flash-Speicher auch eine Information zur Priorisierung der einzelnen Prozesse bereitgestellt werden. Ein weiterer Speicher ist zur Initialisierung und zum Hochfahren des konfigurierbaren Speichermoduls, beispielsweise des FPGA's, vorgesehen. Dieser Speicher kann als separates Bauelement oder auf dem FPGA vorhanden sein.

Als Hardwaremodul kann wie bereits beschrieben eine umkonfigurierbare Speichereinheit wie ein FPGA vorgesehen sein, es können aber auch mehrere parallel geschaltete Mikrorechner oder Hardwareschaltungen vorgesehen sein, die aufgrund des Priorisierungsprozesses beauftragt werden. Auf diese Weise entsteht ein paralleles Datenverarbeitungssystem, welches mittels der Verteilungseinheit durch die unterschiedlichen Prozesse beauftragt wird und so beaufschlagt wird, dass die Auslastung der Funktion entsprechend gleichmäßig und möglichst effektiv ist.

Bei der FPGA-Implementierung oder der Implementierung mittels eines konfigurierbaren Hardwaremoduls ist besonders vorteilhaft, dass eine Verarbeitung wichtiger Datenbus-Daten in Echtzeit mit Antwortzeiten geringer als eine Millisekunde erfolgen kann. In dieser Zeit wird einerseits ein hochpriorisierter Prozess bereitgestellt das Hardwaremodul wird gegebenenfalls umkonfiguriert entsprechend einer Hardwarekonfiguration und die Abarbeitung erfolgt in dieser Zeit, so dass das Hardwaremodul für weitere Prozesse zur Verfügung steht.

Bei dem Verfahren der vorliegenden Erfindung kann eine Prioritätskennung dynamisch vergeben und bei unterschiedlichen Fahr- oder Bedienungssituationen des Verkehrsmittels erfolgt eine unterschiedliche Prioritätsvergabe an die verschiedenen Prozesse. Dieses Priorisierungsverfahren bei Steuerungsprozessen ermöglicht es, aus mehreren in einem Wartespeicher abgelegten Steuerungsprozessen, den wichtigsten bzw. zeitkritischsten auszuwählen und einem Hardwaremodul zur Abarbeitung zuzuordnen. Das Priorisierungsverfahren eignet sich besonders dazu, abzuarbeitende Steuerungsprozesse auf mehrere Hardwaremodule zur Datenverarbeitung zu verteilen. Dabei weist eine dem Wartespeicher zugeordnete Verteilungseinheit die aufgereihten Steuerungsprozesse entsprechend ihrer Priorisierung an die unterschiedlichen Hardwaremodule zur Datenverarbeitung zu.

Die Hardwaremodule sind dabei entweder konventionelle Datenverarbeitungseinheiten, wie logische Schaltungen oder Mikrorechner, oder sind umkonfigurierbare Speichereinheiten, wie beispielsweise ein FPGA. Das Verfahren wählt aus dem Wartespeicher den Prozess mit der höchsten Priorität aus und ordnet diesen einem der parallel zu Verfügung stehenden Hardwaremodule zu, so dass eine schnellstmögliche sichere Abarbeitung durchführbar ist.

Insbesondere wenn die Hardwaremodule als umkonfigurierbare Hardware ausgeführt sind, lassen sich flexible anpassbare Elektronikmodule erzeugen. Es kann dabei sogar vorgesehen sein, dass innerhalb eines Hardwaremoduls durch Konfiguration eines FPGA's mehrere Recheneinheiten entstehen. Dazu wird jedes Mal eine Hardwarekonfiguration auf das FPGA geladen, um dieses umzukonfigurieren. Auf diesem FPGA wird dann der Steuerungsprozess durchgeführt und nach dessen Abarbeitung wird dann das FPGA für den nächsten Prozess, der diesem zugeordnet wird, konfiguriert. Die Steuerung der partiell dynamischen Rekonfiguration derartiger Hardwaremodule erfolgt mittels in einer kleinen Bibliothek abgelegten und vorprogrammierten Hardwarekonfiguration für die unterschiedlichen Konfigurationen. Je nach Anforderung eines Prozesses wird dann die entsprechende Hardwarekonfiguration in das FPGA geladen, dieses umkonfiguriert und der Steuerungsprozess darauf abgearbeitet.

Durch das erfindungsgemäße Verfahren in Verbindung mit der erweiterten Funktionalität der Hardwaremodule lässt sich eine Reduzierung der Anzahl der Steuergeräte innerhalb einer Steuergerätearchitektur bei einem Verkehrsmittel durchführen. Durch die Mehrfachnutzung der unterschiedlichen Hardwaremodule für sich unterscheidende Steuerungsprozesse lässt sich die Summe der notwendigen Chipfläche verringern. Echte parallele und entkoppelte Prozesse sind auf einem Chip bzw. einem einzigen Hardwaremodul möglich, wobei Teil-Chipflächen umkonfiguriert werden und Prozesse auf diesen Teil-Chipflächen vollständig abgearbeitet werden. Es entstehen unabhängig voneinander testbare und wieder verwendbare Funktionen. Wenn beispielsweise ein Fensterheber betätigt wird und eine Konfiguration eines FPGA's auf einem Hardwaremodul erfolgt, kann dieselbe Topologie gegebenenfalls für die Steuerung eines weiteren Fensterhebers verwendet werden. Durch das Umkonfigurieren der Hardwaremodule entsteht ein anforderungsgerechtes Bereitstellen von Funktionen, wodurch kein unnötiges Verwalten von Ressourcen erforderlich ist.

Bei einer vorteilhaften Weiterbildung der Erfindung wird bzgl. der Vergabe der dynamischen Prioritätskennung in mindestens zwei Zustände unterschieden. Bei einem ersten Betriebszustand des Verkehrsmittels, wenn dieses beispielsweise auf einer Straße bewegt wird, werden für ein und dieselbe Komponente bzw. ein und denselben Prozess andere Prioritätskennungen vergeben, als wenn das Verkehrsmittel sich im Ruhezustand befindet, wobei es geparkt ist zumindest aber nicht verkehrsmäßig bewegt wird.

Durch diese unterschiedliche Vergabe von Prioritätskennungen kann beispielsweise einer Schiebedachanordnung im Ruhezustand eine hohe Priorisierung vergeben werden, so dass diese bevorzugt abgearbeitet wird, während im Fahrzustand beim Betätigen des Schiebedachs wegen der geringeren Priorität eine Wartezeit von einigen Millisekunden entstehen kann bis der Prozess abgearbeitet wird. Der Fahrer wird die verhältnismäßig kurze Wartezeit kaum zur Kenntnis nehmen, während die Hardwaremodule in der Zwischenzeit hochpriore Prozesse abarbeiten können, wie beispielsweise die Übertragung und Ansteuerung von sicherheitsrelevanten Signalen, beispielsweise die Auslösung eines Airbags. Infolgedessen kann dem Prozess für das Schiebedach eine im Betriebszustand des Verkehrsmittels geringere Prioritätskennung zugewiesen werden, so dass der Prozess zur Betätigung des Schiebedachs erst nach höher priorisierten Prozessen durchgeführt wird. Es kann dazu für jeden Prozess eine gewisse Zeitdauer vorgesehen sein, innerhalb der dieser Prozess abgearbeitet werden muss. Nach Ablauf dieser Zeitdauer kann entweder die Prioritätskennung hochgesetzt werden oder eben der Prozess sofort ausgeführt werden.

Ebenso kann eine Einbruch- und/oder Diebstahlwarnanlage im Ruhezustand eine hohe dynamische Prioritätskennung aufweisen, während im Betriebs- bzw. Fahrzustand des Verkehrsmittels die Einbruchs- und/oder Diebstahlwarnanlage eine geringe oder gar keine Prioritätskennung aufweist. Die fehlende Prioritätskennung kann dann bedeuten, dass der Prozess in diesem Fahrzustand überhaupt nicht durchgeführt wird.

Durch die Bereitstellung des Wartespeichers können dort sämtliche Prozesse eingestellt werden und entsprechend der Prioritätskennung sortiert werden. Der Prozess mit der höchsten Prioritätskennung wird dann durch die Datenverarbeitungseinheit bzw. das Hardwaremodul abgearbeitet, welches die nächste Datenverarbeitungs-Ressource bereitstellt. Werden beispielsweise mehrere Hardwaremodule parallel vorgesehen, werden die Prozesse entsprechend ihrer Priorität diesen nacheinander zugeordnet. Bei umkonfigurierbaren Speichermitteln, beispielsweise einem FPGA, können gewisse Teilbereiche des FPGA's durch Herunterladen einer Hardwarekonfiguration in logische Schaltungen umkonfiguriert werden, so dass der Steuerungsprozess in Hardware automatisch ausgeführt wird. Bei dem erfindungsgemäßen Verfahren wird daher jedem Prozess auch eine bestimmte Hardwarekonfiguration zugeordnet, um gegebenenfalls das Hardwaremodul umkonfigurieren zu können.

Es gibt nun verschiedene Möglichkeiten, die Lehre der vorliegenden Erfindung in vorteilhafter Weise auszugestalten und weiterzubilden. Dazu ist einerseits auf die untergeordneten Ansprüche und andererseits auf die nachfolgende Erläuterung einer Ausführungsform zu verweisen. In der Zeichnung ist eine Ausführungsform der erfindungsgemäßen Vorrichtung dargestellt. Es zeigen jeweils in schematischer Darstellung,
- Fig. 1: eine Darstellung des erfindungsgemäßen Steuergeräts mit vier Hardwaremodulen,
- Fig. 2: ein Flussdiagramm für das Verfahren zur Auswahl eines bestimmten Hardwaremoduls zur Abarbeitung eines Steuerprozesses und
- Fig. 3: die Verteilereinheit des Steuergeräts mit einem Kontextspeicher zur Sicherstellung des fehlerlosen Ablaufs bei Zuweisung eines Steuerprozesses an ein Hardwaremodul.

Das Steuergerät 1 ist über einen externen Datenbus, beispielsweise ein CAN-Bus 2, mit anderen Steuergeräten eines Verkehrsmittels, insbesondere eines Kraftfahrzeugs, elektrisch leitend verbunden. Die von den übrigen, nicht dargestellten Steuergeräten einkommenden Busnachrichten werden vom Datenbus 2 über die Ein-/Ausgabeschnittstelle 3 über einen Eingangskanal 4 bzw. den Ausgangskanal 5 an eine Verteilereinheit 6 zugewiesen. In der Verteilereinheit 6 werden die Nachrichten des externen Datenbusses 2 gespeichert und für die Datenverarbeitung im Steuergerät 1 bereitgestellt.

Die Verteilereinheit 6 weist über einen internen Datenbus 7 die sich aus den Nachrichten des Datenbusses 2 ergebenden Steuerungsprozesse an die verschiedenen Hardwaremodule 8, 9, 10 und 11 zu, die alle zur Abarbeitung der Steuerprozesse zur Verfügung stehen. Die Verteilereinheit 6 priorisiert gegebenenfalls die Steuerprozesse, die sich einerseits aus den Nachrichten des Datenbusses 2 und gegebenenfalls aus direkt mit dem Steuergerät 1 verbundenen Sensoren und Aktoren ergeben. Eine Ein-/Ausgabeeinheit 12 für den internen Datenbus 7 ordnet die von der Verteilungseinheit 6 ausgegebenen Nachrichten über den internen Datenbus 7 an die Hardwaremodule 8 bis 11 zu. Das Steuergerät 1 weist außerdem ein Initialisierungsmodul 13 auf, das von einem internen oder externen Flash-Speicher 14 die Initialisierungsdaten für die verschiedenen Hardwaremodule 8 bis 11 und außerdem Informationen zur Konfiguration der Hardwaremodule 8 bis 11 aufweist.

Die Hardwaremodule 8 bis 11 sind bevorzugt als konfigurierbare Speicher ausgebildet, die ihre Hardware umkonfigurieren können, wozu vom Flash-Speicher 14 die notwendige Hardwarekonfiguration heruntergeladen wird und aufgrund dieser Hardwarekonfiguration die Verbindungsstruktur zwischen den Speicherzellen eines jeden Hardwaremoduls 8 bis 11 umkonfiguriert werden kann. Dadurch können die Hardwaremodule 8 bis 11 auf ihren Chipflächen u. a. als Speicher dienen, logische Gatter bilden oder auch einen Mikrorechner simulieren, der dann mittels einer Software ein Steuerungsprozess durchführt. Der übliche Fall wird jedoch derart aussehen, dass auf den Chipflächen der Hardwaremodule 8 bis 11 entsprechend der Hardwarekonfiguration eine elektrische Schaltung nachgebildet wird, die dann ohne zusätzliche Software den Steuerungsprozess durchführt.

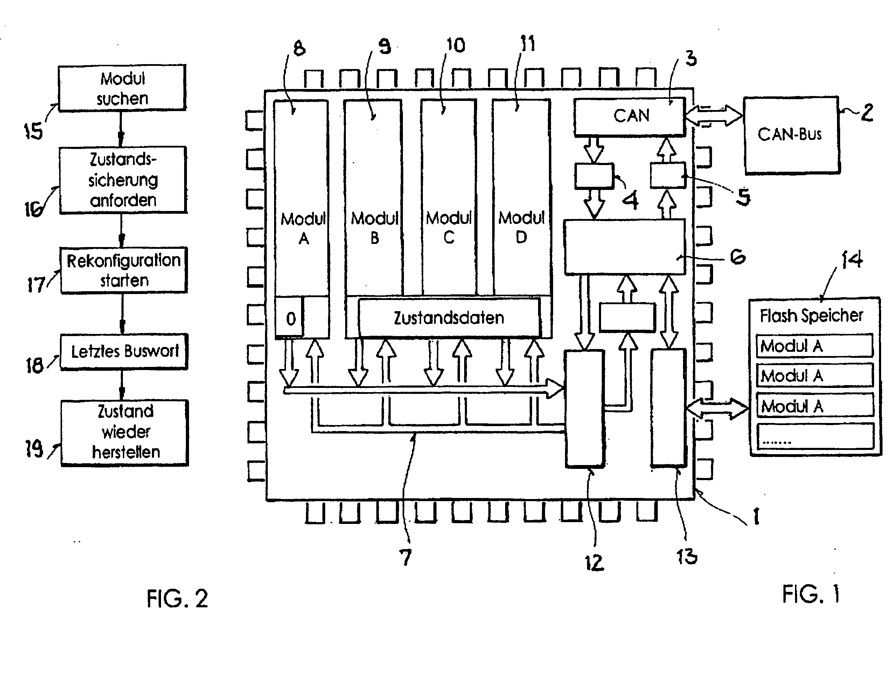

In Figur 2 ist aufgezeigt, wie beim erfindungsgemäßen Verfahren ein Steuerprozess an die verschiedenen Hardwaremodule 8 bis 11 zugewiesen wird. Im einfachsten Fall kann jedes Hardwaremodul aufgrund der Hardwarekonfiguration genau eine elektrische Schaltung nachbilden und es werden die Steuerprozesse gemäß den Anfangsbedingungen abgearbeitet. Nach dem Ende eines Steuerprozesses kann dann beispielsweise das Hardwaremodul 8 wieder für einen neuen Steuerprozess freigegeben werden, wobei aufgrund der Information der Verteilungseinheit 6 und der im Flash-Speicher 14 oder auf dem Halbleiterchip des FPGA 8 selbst abgelegten Informationen sich das Hardwaremodul 8 gegebenenfalls umkonfiguriert und einen anderen Steuerprozess für eine andere Komponente im Verkehrsmittel durchführt.

Wie in Figur 2 gezeigt wird sich die Verteilereinheit 6 zunächst beim Schritt 15 ein geeignetes, freies der Hardwaremodule 8 bis 11 auswählen und eine Zustandssicherung 16 durchführen, so dass die bisher auf dem ausgewählten Hardwaremodul 8 bis 11 abgearbeiteten Steuerprozess und dessen Daten nicht verloren gehen. Nach Freigabe des Hardwaremoduls 8, 9, 10 oder 11 kann dann bei 17 eine Rekonfiguration des freien Hardwaremoduls 8, 9, 10 oder 11 erfolgen. In einem Schritt 18 wird dann das auf dem internen Datenbus 7 vorhandenen Buswort, d. h. die zuletzt gesendete Nachricht des internen Datenbusses 7, ermittelt und abgespeichert, so dass das Buswort nach der Rekonfiguration des Hardwaremoduls 8 oder nach dem Abarbeiten des zwischengeschalteten Prozesses bei Wiederaufnahme des abgebrochenen Prozesses wieder auf den internen Bus 7 gesendet werden kann. Nach dem Abschluss des Steuerprozesses wird bei 19 der Zustand des Hardwaremoduls wieder hergestellt, wie dieser vor der Abarbeitung des Prozesses vorhanden war.

Der in Figur 2 dargestellte Prozess eignet sich insbesondere dann, wenn ein mit hoher Priorität durchzuführender Steuerprozess ausgeführt werden muss, obwohl ein langsamerer Steuerprozess auf einem der Hardwaremodule 8 bis 11 noch durchgeführt wird. Der zuletzt vorliegende Zustand im jeweiligen Hardwaremodul 8, 9, 10 oder 11 wird dann zwischengespeichert, der hochpriorisierte Steuerprozess durchgeführt und nach Ablauf des hochpriorisierten Steuerprozesses kann dann wieder der zuletzt vorgesehene Zustand auf dem Hardwaremodul 8 bis 11 wieder hergestellt werden, wie dieser vor der Unterbrechung gegeben war. Auf diese Weise kann dann der langsamere Steuerprozess weitergeführt werden ausgehend von einem gesicherten Zustand.

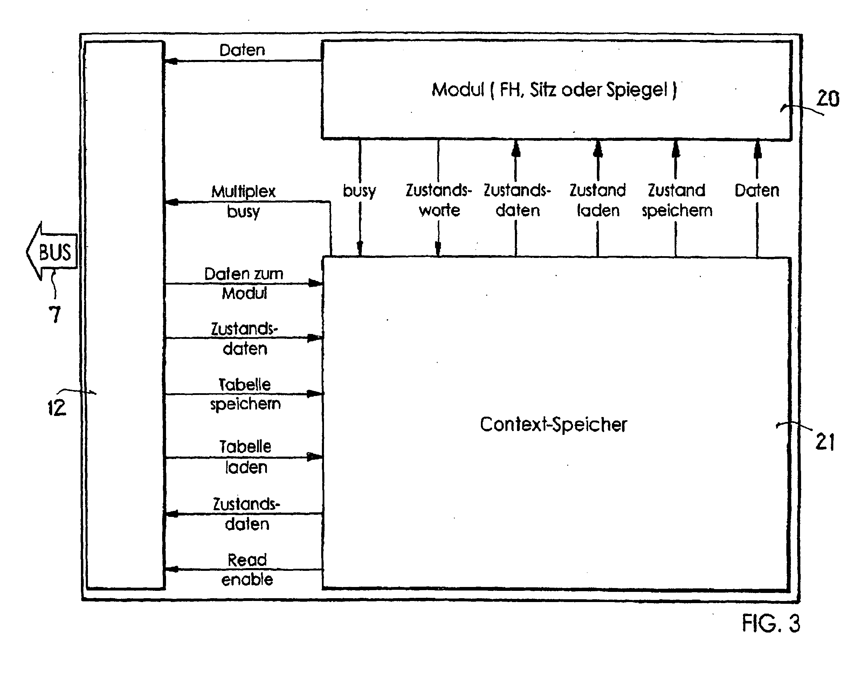

Figur 3 zeigt eine Zustandsdatenverwaltung als Bestandteil eines Hardwaremoduls 8, 9, 10 oder 11 mit der Verbindung zum internen Bus 7, an den die Steuerprozesse 20, wie zum Beispiel jene zur Steuerung des Sitzes, Spiegels oder Fensterhebers, angeschlossen sind. Über das Eingabe-/Ausgabemodul 12 können neue Zustandsdaten über den internen Bus 7 zum Kontext-Speicher 21 übertragen werden. Im Kontext-Speicher sind Parameter und Eingabe-/Ausgabedaten für die Hardwaremodule 8 bis 11 abgelegt, die zum Starten eines Steuerprozesse nach dem Umkonfigurieren eines Hardwaremoduls erforderlich sind. Die Zustandsdatenverwaltung weist zusätzlich einen Kontextspeicher 21 auf, in dem für jedes Hardwaremodul 8 bis 11 der jeweilige Zustand bei bestimmten Ereignissen zurückgespeichert wird. Außerdem wird im Kontextspeicher 21 eine Liste bzw. Tabelle angelegt, die Eingangs- und Ausgangsdaten des Hardwaremoduls 8, 9, 10 oder 11 festhält und bestimmte Zustände der jeweiligen Hardwaremodule 8 bis 11 mitprotokolliert. Diese Zustandstabellen können über die Eingabe-/Ausgabeeinheit 12 für den internen Datenbus 7 in dessen Busprotokoll umgesetzt werden und über den internen Datenbus 7 zu den Hardwaremodulen 8 bis 11 übertragen werden.

Wird beispielsweise ein Steuerprozess auf einem der Hardwaremodule 8 bis 11 ausgeführt und wird der Steuerprozess unterbrochen, so werden die Zustandsdaten im Kontextspeicher 21 festgehalten und es kann gegebenenfalls ein hochpriorisierter Steuerprozess durchgeführt werden. Nach dessen Abschluss können dann die im Kontextspeicher 21 abgelegten Zustandsdaten zum Hardwaremodul 8 bis 11 übertragen werden, wodurch dann der Steuerprozess zur Ausführung eines anderen Prozesses unterbrochen werden kann und später wieder vom selben Zustand weitergeführt werden kann.

Das gesamte Steuergerät 1 kann auf einem einzigen Halbleiterchip umgesetzt sein, welcher in Chipsegmenten dann die Hardwaremodule 8 bis 11 und die übrigen elektrischen Schaltungen umsetzt. Dabei kann das Steuergerät ein großflächiges FPGA aufweisen, welches die erforderlichen Bausteine nachbildet.

### Bezugszeichenliste

- 1: Steuergerät
- 2: externer Datenbus
- 3: Eingabe-/Ausgabeeinheit
- 4: Eingangskanal
- 5: Ausgangskanal
- 6: Verteilungseinheit
- 7: interner Datenbus
- 8 - 11: Hardwaremodule
- 12: Eingabe-/Ausgabeeinheit für 7
- 13: Initialisierungsmodul
- 14: Flash-Speicher
- 15 - 19: Verfahrensschritte
- 20: Eingabe-/Ausgabemodul
- 21: Kontextspeicher

## Patentansprüche

1. Steuergerät zur Steuerung von Komponenten in einem Verkehrsmittel mit einer Schnittstelle zu einem externen Datenbus (2), einem Hardwaremodul (8 - 11) und einem Speicher zur Bereitstellung der für die Datenverarbeitung notwendigen Daten, wobei Steuerungsprozesse von zeitlich parallel zueinander ansteuerbaren Steuerprozessen abgearbeitet werden und **dadurch** direkt über eine Schnittstelle zum Datenbus (2) oder mit Sensoren/Aktoren kommunizieren, um Verkehrsmittelkomponenten zu steuern, **dadurch gekennzeichnet, dass** das Steuergerät (1) mindestens zwei rekonfigurierbare Hardwaremodule (8 - 11) aufweist, die aufgrund der Nachrichten vom Datenbus (2) oder der Steuerbefehle des Steuergeräts (1) mehrere Steuerprozesse auf den Hardwaremodulen (8 - 11) zeitlich parallel durchführen, wobei eine Verteilungseinheit (6) zum Zuordnen der parallel ablaufenden Steuerungsprozesse auf die Hardwaremodule (8 - 11) vorgesehen ist, dass nach dem Zuordnen eines Steuerungsprozesses zu einem Hardwaremodul (8 - 11) zunächst eine Hardwarekonfiguration in das Hardwaremodul (8 - 11) geladen wird, um dessen Hardware neu zu konfigurieren und dass dann nach Zuweisen der Eingangsdaten für den Steuerungsprozess das neu konfigurierte Hardwaremodul (8 - 11) die Steuerung der zugeordneten Komponente übernimmt, und dass die Steuerung der partiell dynamischen Rekonfiguration der Hardwaremodule erfolgt mittels in einer kleinen Bibliothek abgelegten und vorprogrammierten Hardwarekonfiguration für die unterschiedlichen Konfigurationen, und dass die Verteilungseinheit (6) entsprechend den Anforderungen eines Prozesses die Hardwarekonfiguration in das rekonfigurierbare Hardwaremodul (FPGA) lädt, dieses umkonfiguriert und der Steuerungsprozess darauf im rekonfigurierbaren Hardwaremodul (FPGA) abgearbeitet wird.

2. Steuergerät nach Anspruch 1,
**dadurch gekennzeichnet, dass**
eines der Hardwaremodule (8 - 11) eine Chipfläche aufweist, die durch Konfiguration mittels einer von einem Speichermittel heruntergeladenen Hardwarekonfiguration in mindestens zwei Hardwarebereiche unterteilbar ist, wobei ein Steuerungsprozess auf dem ersten Hardwarebereich ausführbar ist und mindestens ein weiterer Steuerungsprozess auf einem weiteren Hardwarebereich ausführbar ist und dass dieses Hardwaremodul (8 - 11) umkonfigurierbar ist, so dass zur Ausführung eines weiteren Steuerungsprozesses die Hardwarebereiche oder Teile davon gemeinsam konfiguriert werden, um die zugeordneten Komponenten zu steuern.

3. Steuergerät nach Anspruch 1 oder 2,
**dadurch gekennzeichnet, dass**
ein Hardwaremodul (8 - 11) zur Ausführung eines ersten Steuerungsprozesses konfiguriert ist, so dass eine von mehreren zeitlich parallel betätigbaren gleichartigen Komponenten, wie bspw. mehrere Fensterhebermotoren des Verkehrsmittels, ansteuerbar sind, dass nach Abschluss des ersten Steuerungsprozesses das konfigurierte Hardwaremodul (8 - 11) zur Steuerung einer anderen der gleichartigen Komponente des Verkehrsmittels konfiguriert und eingesetzt wird, so dass die Komponenten sequentiell nacheinander ein Startsignal von dem Hardwaremodul (8 - 11) erhalten, und dass nach Abarbeiten des Startprozesses eines der Hardwaremodule (8 - 11) mittels der Verteilungseinheit (6) umkonfigurierbar ist, um den Anhalte-/Beenden-Steuerprozess für die gleichartigen Komponenten auszugeben.

4. Steuergerät nach einem der Ansprüche 1 bis 3,
**dadurch gekennzeichnet, dass**
die gleichartigen Komponenten nach der Ansteuerung durch das Hardwaremodul (8 - 11) gleichzeitig in Betrieb sind und von dem Hardwaremodul (8 - 11) zeitlich sequentiell in einem Zeitmultiplex-Betrieb desselben Hardwaremoduls (8 - 11) ein Anhalte-/Beenden-Signal erhalten.

5. Steuergerät nach einem der Ansprüche 1 bis 4,
**dadurch gekennzeichnet, dass**
ein Zustandsspeicher vorgesehen ist, in dem Informationen über den Zustand, die Lage oder die Position einer Komponente abgelegt sind und dass die Verteilungseinheit (6) bei der Zuordnung der Steuerungsprozesse an ein Hardwaremodul (8 - 11) die Informationen aus dem Zustandsspeicher als Eingangsdaten an das Hardwaremodul (8 - 11) überträgt.

6. Verfahren zur Steuerung mehrerer Komponenten in einem Verkehrsmittel, welches in einem Steuergerät (1) einen ersten Steuerprozess für eine erste Komponente und einen zweiten Steuerprozess für eine zweite Komponente ausführt, wobei jedes Steuerprogramm einen zeitlich begrenzten Prozess durchführt, um die zugeordnete Komponente zu steuern, bei dem jeder Prozess durch einen Start- und einen Endzeitpunkt bestimmt wird, der Startzeitpunkt durch ein Auslöseereignis definiert wird und bei dem parallel durchführbare Prozesse auf demselben Steuergerät (1) abgearbeitet werden, **dadurch gekennzeichnet, dass** zur Durchführung eines Prozesses jeweils ein Hardwaremodul (8 - 11) bestehend aus konfigurierbaren Speicher/Logikzellen konfiguriert werden, indem eine dem Steuerprozess zugeordnete Hardwarekonfiguration von einem Speichermittel auf das Hardwaremodul (8 - 11) geladen wird und dass darauf folgend der Steuerprozess abgearbeitet wird und dass nach der Abarbeitung ein weiterer Prozess ausgewählt wird und das zugehörende Hardwaremodul (8 - 11) bestehend aus konfigurierbaren Speicher/Logikzellen konfiguriert wird, und dass der zugehörende Steuerprozess auf diesem Hardwaremodul (8 - 11) ausgeführt wird, und dass eine Verteilereinheit (6) zunächst ein geeignetes, freies Hardwaremodul (8 bis 11) auswählt und eine Zustandssicherung (16) der Daten durchführt, so dass der bisher auf dem ausgewählten Hardwaremodul (8 bis 11) abgearbeitete Steuerprozess und dessen Daten nicht verloren gehen, dass nach Freigabe des Hardwaremoduls (8, 9, 10 oder 11) eine Rekonfiguration des freien Hardwaremoduls (8, 9, 10 oder 11) erfolgt und dass nach dem Abarbeiten des zwischengeschalteten Prozesses der Zustand des Hardwaremoduls (8, 9, 10 oder 11) wieder hergestellt wird, wie dieser vor der Abarbeitung des Prozesses vorhanden war.

7. Verfahren nach Anspruch 6,
**dadurch gekennzeichnet, dass**
mittels Konfiguration durch eine von einem Speichermittel heruntergeladenen Hardwarekonfiguration ein Hardwaremodul (8 - 11) in mindestens zwei Hardwarebereiche unterteilt wird, dass ein erster Steuerungsprozess auf dem ersten Hardwarebereich ausgeführt und ein zweiter Steuerungsprozess auf dem zweiten Hardwarebereich ausgeführt wird, und dass danach dieses Hardwaremodul (8 - 11) umkonfiguriert wird, so dass zur Ausführung eines weiteren Steuerungsprozesses beide Hardwarebereiche oder Teile davon gemeinsam konfiguriert werden können, um eine zugeordnete Komponente zu steuern.

8. Verfahren nach Anspruch 6 oder 7,
**dadurch gekennzeichnet, dass**
ein Hardwaremodul (8 - 11) zur Ausführung eines ersten Steuerungsprozesses konfiguriert wird, so dass eine von mehreren zeitlich parallel betätigbaren gleichartigen Komponenten, wie bspw. mehrere Fensterhebermotoren des Verkehrsmittels, angesteuert werden, dass nach Abschluss des ersten Steuerungsprozesses das konfigurierte Hardwaremodul (8 - 11) zur Steuerung einer anderen der gleichartigen Komponente des Verkehrsmittels konfiguriert und eingesetzt wird, so dass die Komponenten sequentiell nacheinander ein Startsignal von dem Hardwaremodul (8 - 11) erhalten, und dass nach Abarbeiten des Startprozesses eines der Hardwaremodule (8 - 11) mittels der Verteilungseinheit (6) umkonfiguriert werden, um den Anhalte-/Beenden-Steuerprozess für die gleichartigen Komponenten auszugeben.

9. Verfahren nach einem der Ansprüche 6 bis 8,
**dadurch gekennzeichnet, dass**
die gleichartigen Komponenten nach der Ansteuerung durch das Hardwaremodul (8 - 11) gleichzeitig in Betrieb gesetzt werden und von dem Hardwaremodul (8 - 11) zeitlich sequentiell in einem Zeitmultiplex-Betrieb desselben Hardwaremoduls (8 - 11) ein Anhalte-/Beenden-Signal erhalten.

10. Verfahren nach einem der Ansprüche 6 bis 9,
**dadurch gekennzeichnet, dass**
Informationen über den Zustand, die Lage oder die Position einer Komponente in einem Zustandsspeicher abgelegt werden und dass die Verteilungseinheit (6) bei der Zuordnung der Steuerungsprozesse an ein Hardwaremodul (8 - 11) die Informationen aus dem Zustandsspeicher als Eingangsdaten an das Hardwaremodul (8 - 11) überträgt.

## Claims

1. Control device for controlling components in a means of transportation with an interface to an external databus (2), a hardware module (8-11) and a memory for making available the data necessary for the data processing, controller processes being executed by control processes which can be actuated chronologically in parallel with one another and as a result communicate directly via an interface to the databus (2) or with sensors/actuators in order to control components of means of transportation, **characterized in that** the control device (1) has at least two reconfigurable hardware modules (8-11) which carry out a plurality of control processes on the hardware modules (8-11) chronologically in parallel on account of the messages from the databus (2) or on account of the control instructions of the control device (1), a distribution unit (6) being provided for assigning the controller processes which run in parallel to the hardware modules (8-11), **in that**, after the assignment of a controller process to a hardware module (8-11), a hardware configuration is firstly loaded into the hardware module (8-11) in order to newly configure its hardware, and **in that**, after the allocation of the input data for the controller process, the newly configured hardware module (8-11) performs the control of the assigned component, and **in that** the control of the partially dynamic reconfiguration of the hardware modules is carried out by means of a preprogrammed hardware configuration, stored in a small library, for the different configurations, and **in that** the distribution unit (6) loads the hardware configuration into the reconfigurable hardware module (FPGA) and reconfigures it in accordance with the requirements of a process, and the control process is subsequently carried out in the reconfigurable hardware module (FPGA).

2. Control device according to Claim 1, **characterized in that** one of the hardware modules (8-11) has a chip area which can be divided into at least two hardware areas by configuration by means of a hardware configuration which is downloaded from a memory means, it being possible to carry out a controller process on the first hardware area, and at least one further controller process can be carried out on the further hardware area, and **in that** this hardware module (8-11) can be reconfigured so that, in order to carry out a further controller process, the hardware areas or parts thereof are configured jointly in order to control the assigned components.

3. Control device according to Claim 1 or 2, **characterized in that** a hardware module (8-11) is configured to carry out a first controller process so that one of a plurality of identical components which can be activated chronologically in parallel, such as for example a plurality of window lifter motors of the means of transportation, can be actuated, **in that**, after the first controller process has been concluded, the configured hardware module (8-11) is configured and used to control another of the identical components of the means of transportation so that the components receive sequentially one after the other a start signal from the hardware module (8-11), and **in that**, after the start process has been executed, one of the hardware modules (8-11) can be reconfigured by means of the distribution unit (6) in order to output the stopping/ending control process for the identical components.

4. Control device according to one of Claims 1 to 3, **characterized in that** the identical components operate simultaneously after the actuation by the hardware module (8-11) and receive a stopping/ending signal from the hardware module (8-11) in a chronological sequence in a time-division multiplex operating mode of the same hardware module (8-11).

5. Control device according to one of Claims 1 to 4, **characterized in that** a state memory is provided in which information relating to the state, the location or the position of a component is stored, and **in that**, during the assignment of the controller processes to a hardware module (8-11), the distribution unit (6) transmits the information from the state memory as input data to the hardware module (8-11).

6. Method for controlling a plurality of components in a means of transportation, which method carries out, in a control device (1), a first control process for a first component and a second control process for a second component, each control program carrying out a chronologically limited process in order to control the assigned component, and in which each process is determined by a start time and an end time, and the start time is defined by a triggering event, and in which processes which can be carried out in parallel are executed on the same control device (1), **characterized in that**, in order to carry out a process, in each case a hardware module (8-11) composed of configurable memory/logic cells is configured by a hardware configuration assigned to the control process being loaded onto the hardware module (8-11) from a memory means, and **in that** the control process is subsequently executed, and **in that** after the execution a further process is selected and the associated hardware module (8-11) composed of configurable memory/logic cells is configured, and **in that** the associated control process is carried out on this hardware module (8-11) and **in that** a distribution unit (6) firstly selects a suitable, free hardware module (8 to 11), and state protection (16) of the data is carried out so that the control process which has been carried out up to now on the selected hardware module (8 to 11) and the data of said control process are not lost, **in that**, after the hardware module (8, 9, 10 or 11) is enabled, the free hardware module (8, 9, 10 or 11) is reconfigured, and **in that** after the intermediately connected process has been carried out, the state of the hardware module (8, 9, 10 or 11) which was present before the process was carried out is restored.

7. Method according to Claim 6, **characterized in that** a hardware module (8-11) is divided into at least two hardware areas by means of configuration by a hardware configuration which is downloaded from a memory means, **in that** a first controller process is carried out on the first hardware area, and a second controller process is carried out on the second hardware area, and **in that** afterwards this hardware module (8-11) is reconfigured so that, in order to carry out a further controller process, both hardware areas or parts thereof can be configured jointly in order to control an assigned component.

8. Method according to Claim 6 or 7, **characterized in that** a hardware module (8-11) is configured to carry out a first controller process so that one of a plurality of identical components which can be activated chronologically in parallel, such as for example a plurality of window lifter motors of the means of transportation, are actuated, **in that**, after the first controller process has been concluded, the configured hardware module (8-11) is configured and used to control another of the identical components of the means of transportation so that the components receive sequentially one after the other a start signal from the hardware module (8-11), and **in that**, after the start process has been executed, one of the hardware modules (8-11) is reconfigured by means of the distribution unit (6) in order to output the stopping/ending control process for the identical components.

9. Method according to one of Claims 6 to 8, **characterized in that** the identical components are simultaneously activated after the actuation by the hardware module (8-11) and receive a stopping/ending signal from the hardware module (8-11) in a chronological sequence in a time-division multiplex operating mode of the same hardware module (8-11).

10. Method according to one of Claims 6 to 9, **characterized in that** information relating to the state, the location or the position of a component is stored in a state memory, and **in that**, during the assignment of the controller processes to a hardware module (8-11), the distribution unit (6) transmits the information from the state memory as input data to the hardware module (8-11).

## Revendications

1. Appareil de commande pour la commande de composants d'un moyen de transport, qui présente une interface avec un bus externe de données (2), un module électronique (8 - 11) et une mémoire qui délivre les données nécessaires pour le traitement des données, des processus de commande qui font partie des processus de commande aptes à être commandés parallèlement les uns aux autres dans le temps étant exécutés et communiquant ainsi directement par l'intermédiaire d'une interface avec le bus de données (2) ou avec des détecteurs ou actionneurs pour commander des composants du moyen de transport,
**caractérisé en ce que**
- l'appareil de commande (1) présente au moins deux modules électroniques (8 - 11) reconfigurables qui, sur base des messages provenant du bus de données (2) ou des ordres de commande de l'appareil de commande (1) exécutent parallèlement dans le temps plusieurs processus de commande sur les modules électroniques (8 - 11), une unité de répartition (6) étant prévue pour attribuer aux modules électroniques (8 - 11) les processus de commandes qui se déroulent en parallèle,
- **en ce qu'**après l'attribution d'un processus de commande à un module électronique (8 - 11), une configuration électronique est d'abord chargée dans le module électronique (8 - 11) pour reconfigurer son électronique,
- **en ce qu'**après l'affectation des données d'entrée du processus de commande, le module électronique (8 - 11) reconfiguré assure la commande des composants associés,
- **en ce que** la commande de la reconfiguration en partie dynamique des modules électroniques s'effectue pour les différentes configurations au moyen d'une configuration électronique conservée dans une bibliothèque et préprogrammée et
- **en ce que** l'unité de répartition (6) charge la configuration électronique dans le module électronique reconfigurable (FPGA) conformément aux nécessités d'un processus et reconfigure ce module, le processus de commande étant alors exécuté dans le module électronique (FPGA) reconfigurable.

2. Appareil de commande selon la revendication 1, **caractérisé en ce que** l'un des modules électroniques (8 - 11) présente une surface de puce électronique qui peut être divisée en au moins deux parties électroniques par configuration au moyen d'une configuration électronique qui peut être téléchargée depuis un moyen de mémoire, un processus de commande pouvant être exécuté sur la première partie électronique et au moins un autre processus de commande pouvant être exécuté sur une autre partie électronique, et **en ce que** ce module électronique (8 - 11) est reconfigurable en configurant ensemble les parties électroniques ou des portions de celles-ci pour exécuter un autre processus de commande qui commande les composants associés.

3. Appareil de commande selon les revendications 1 ou 2, **caractérisé en ce que**
- un module électronique (8 - 11) est configuré pour exécuter un premier processus de commande pour pouvoir commander un des différents composants de même type apte à être actionné parallèlement dans le temps, par exemple plusieurs moteurs de lève-vitre du moyen de transport,
- **en ce que** lorsque le premier processus de commande est terminé, le module électronique (8 - 11) configuré est configuré et utilisé pour commander un autre des composants de même type du moyen de transport de telle sorte que les composants reçoivent successivement un signal de démarrage du module électronique (8 - 11) et
- **en ce qu'**après avoir exécuté le processus de démarrage, un des modules électroniques (8 - 11) peut être reconfiguré au moyen de l'unité de répartition (6) pour exécuter le processus de commande d'interruption ou d'arrêt pour les composants de même type.

4. Appareil de commande selon l'une des revendications 1 à 3, **caractérisé en ce que**
- après avoir été commandés par le module électronique (8 - 11), les composants de même type fonctionnent simultanément et reçoivent successivement du module électronique (8 - 11) un signal d'interruption ou d'arrêt du même module électronique (8 - 11) qui fonctionne en multiplexage temporel.

5. Appareil de commande selon l'une des revendications 1 à 4, **caractérisé en ce que**
- il présente une mémoire d'état dans laquelle des informations sur l'état ou la position d'un composant sont conservées et
- **en ce que** l'unité de répartition (6) transmet comme données d'entrée ou module électronique (8 - 11) les informations qui proviennent de la mémoire d'état lorsque les processus de commande sont attribués à un module électronique (8 - 11).

6. Procédé de commande de plusieurs composants d'un moyen de transport, lequel procédé exécute dans un appareil de commande (1) un premier processus de commande d'un premier composant et un deuxième processus de commande d'un deuxième composant, chaque programme de commande exécutant un processus délimité dans le temps pour commander les composants associés, chaque processus étant défini par un instant de départ et un instant de fin, l'instant de départ étant défini par un événement de déclenchement, des processus aptes à être exécutés parallèlement étant exécutés sur le même appareil de commande (1),
**caractérisé en ce que**
- pour exécuter un processus, un module électronique (8 - 11) constitué de cellules logiques ou de mémoire configurables est configuré en chargeant sur le module électronique (8 - 11) une configuration électronique associée au processus de commande et conservée dans un moyen de mémoire,
- **en ce qu'**ensuite, le processus de commande est exécuté et **en ce qu'**après l'exécution, un autre processus est sélectionné et le module électronique (8 - 11) associé, constitué de cellules logiques ou de mémoire configurables est configuré,
- **en ce que** le processus de commande associé est exécuté sur ce module électronique (8 - 11),
- **en ce qu'**une unité de répartition (6) sélectionne d'abord un module logiciel (8 à 11) libre et approprié et exécute un blocage d'état (16) des données de telle sorte que le processus de commande exécuté jusque là sur le module électronique (8 à 11) sélectionné et ses données ne soient pas perdus,
- **en ce qu'**après libération du module électronique (8, 9, 10 ou 11), on effectue une reconfiguration du module électronique (8, 9, 10 ou 11) libre et
- **en ce qu'**après l'exécution du processus intercalaire, l'état du module électronique (8, 9, 10 ou 11) est rétabli à ce qu'il était avant l'exécution du processus.

7. Procédé selon la revendication 6, **caractérisé en ce que**
- par configuration par une configuration électronique chargée depuis un moyen de mémoire, un module électronique (8 - 11) est divisé en au moins deux parties électroniques,
- **en ce qu'**un premier processus de commande est exécuté sur la première partie électronique et un deuxième processus de commande est exécuté sur la deuxième partie électronique,
- **en ce qu'**ensuite, ce module électronique (8 - 11) est reconfiguré de telle sorte que pour l'exécution d'un autre processus de commande, les deux parties électroniques ou des portions de celles-ci puissent être configurées ensemble pour commander un composant associé.

8. Procédé selon les revendications 6 ou 7,
**caractérisé en ce que**
- un module électronique (8 - 11) est configuré pour exécuter un premier processus de commande de manière à commander plusieurs composants de type similaire aptes à être actionnés parallèlement dans le temps, par exemple plusieurs moteurs de lève-vitre du moyen de transport,
- **en ce que** lorsque le premier processus de commande est terminé, le module électronique (8 - 11) configuré est configuré et utilisé pour commander un autre des composants de même type du moyen de transport de telle sorte que les composants reçoivent successivement du module électronique (8 - 11) un signal de démarrage et
- **en ce que** lorsque le processus de démarrage est terminé, l'un des modules électroniques (8 - 11) est reconfiguré au moyen de l'unité de répartition (6) pour exécuter le processus de commande d'interruption ou d'arrêt des composants de même type.

9. Procédé selon l'une des revendications 6 à 8, **caractérisé en ce qu'**après avoir été commandés par le module électronique (8 - 11), les composants de type similaire sont mis simultanément en fonctionnement et reçoivent successivement du module électronique (8 - 11) un signal d'interruption ou d'arrêt, le module électronique (8 - 11) fonctionnant en multiplexage temporel.

10. Procédé selon l'une des revendications 6 à 9, **caractérisé en ce que**
- des informations sur l'état ou la position d'un composant sont conservées dans une mémoire d'état et
- **en ce que** lors de l'attribution des processus de commande à un module électronique (8 - 11), l'unité de répartition (6) transmet comme données d'entrée au module électronique (8 - 11) les informations contenues dans la mémoire d'état.
